(19) Europäisches Patentamt
European Patent Office
Office européen des brevets

(11) **EP 3 110 126 A1**

(12) **EUROPEAN PATENT APPLICATION**

(43) Date of publication:
**28.12.2016 Bulletin 2016/52**

(51) Int Cl.:
*H04N 1/60* (2006.01)     *H04N 9/67* (2006.01)

(21) Application number: **15306007.4**

(22) Date of filing: **25.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• STAUDER, Jurgen
  35576 CESSON-SÉVIGNÉ (FR)
• JOLLY, Emmanuel
  35576 CESSON-SÉVIGNÉ (FR)
• MORVAN, Patrick
  35576 CESSON-SÉVIGNÉ (FR)

(74) Representative: **Browaeys, Jean-Philippe**
**TECHNICOLOR**
**1-5, rue Jeanne d'Arc**
**92130 Issy-les-Moulineaux (FR)**

(54) **COLOR GAMUT MAPPING BASED ON THE MAPPING OF CUSP COLORS DEFINED IN A LINEAR DEVICE-BASED COLOR SPACE**

(57) For the mapping in a non-linear color space of each source color, a source cusp color and a target cusp color are defined in a linear device-based color space and used to define a cusp lightness condition that the lightness mapping function used for the mapping should satisfy. Generally, the source and target cusp colors do not have the same hue as the source color to map.

Fig.3

EP 3 110 126 A1

**Description**

Technical Field

The invention concerns a method for mapping colors of a source color gamut into a target color gamut that is adapted to the cusp colors of the source and target color gamut.

Background Art

The aim of a color gamut mapping is to redistribute the source colors belonging to a source color gamut (for example the extended color gamut of a film) into a target color gamut (for example the color gamut of a standard television monitor). As the shape and boundaries of a target color gamut are generally different from those of the source color gamut, at least some of the target colors that are obtained after such a mapping are different from their corresponding source colors.

An application area of color gamut mapping is notably video content production and post-production. For example, an original version of a video content need to be converted into specific versions adapted for different types of reproduction or transmission : for example, a specific version for cinema, another for television, and a third one for internet. These different versions can be prepared by manual color correction or/and by application of gamut and tone mapping algorithms.

Among the requirements for color gamut mapping are notably:

- preservation of color neighborhood and order, absence of color banding and false contours, in order, notably, to prevent from incoherent reproduction of grey and color ramps;
- continuity of color and absence of visible quantization or clipping errors, in order, notably, to prevent from banding and false contours;
- separate control for lightness, hue and saturation for keeping the full artistic control on how colors are modified, and for allowing the formulation of a higher, semantic level of artistic intents.

Color gamut mapping is generally carried out on colors that are represented in a color space. Each color is hereby defined by the set of its color coordinates in this color space. Usually, color spaces used for color gamut mapping are generally three-dimensional, however, the below invention is not limited to this. Different types of color spaces may be used to represent colors. A first type are device-based color spaces. One of them is the RGB color space with three color coordinates R,G,B for red, green and blue, respectively. In device-based color spaces, colors are defined by the color device they are related to. For example for a trichromatic color monitor device, a color defined by its device-based color coordinates R,G,B is the color that this monitor will reproduce when a signal corresponding to these coordinates R,G,B is input to the device. Other device-based color spaces exist. Other device-based color spaces are characterized in that they are directly derived from existing device-based color spaces. For display devices and cameras, YCbCr color spaces are well known with luminance coordinate Y and chrominance coordinates Cb and Cr, for example according the standard ITU-R BT.709 called in there $E'_Y$, $E'_{CB}$, $E'_{CR}$. Another color space directly derived from RGB is the well-known HSV color space such as defined in the book "3D computer graphics" by Alan Watt published in second edition in 1993. Another device-based color space is CMYK used for printers having C,M,Y,K coordinates for cyan, magenta, yellow and black, respectively. Here, color coordinates correspond to quantities of ink, therefore the different dimensions or axis of a device-based color space are often called colorant channels.

Another type of color spaces are device-independent color spaces. For example, the well known XYZ color space defined by the CIE in 1931 has coordinates X,Y,Z for red, green and blue, respectively. The definition of color is absolute and does not depend on any real device. In order to transform coordinates of a given color from device-dependent color spaces to device-independent color spaces and vice versa, the behavior of the device needs to be known. While XYZ color space is defined such that the values of X,Y,Z coordinates correspond linearly to flux of light, other device-independent color spaces are designed to correspond to perception of human observers. For example, the Lab color space defined by the CIE in 1976 and called originally L*a*b* color space is a color-opponent space that is perceptually uniform, with dimension L for lightness and a and b for the color-opponent dimensions. The red/green opponent primary colors are represented along the a axis, with green at negative *a* values and red at positive *a* values. The yellow/blue opponent secondary/primary colors are represented along the b axis, with blue at negative *b* values and yellow at positive b values. Other device-independent appearance-based color spaces are for instance the JCh space according to CIECAM-02 or the IPT color space.

In order to define a color gamut mapping, a gamut boundary description (GBD) of the source color gamut and of the target color gamut is generally used. Such a GBD of a color gamut defines the boundary surface of this color gamut in a color space. GBDs comprise generally explicit, generic 3D representations such as triangle meshes or volume models. For instance, a GBD of a color gamut can be based on a mesh of triangles, each triangle being defined by its three vertices in the color space of this GBD. These vertices are colors located on the boundary of the color gamut. The article entitled "Gamut boundary determination for a colour printer using the Face Triangulation Method", by Pellegri and Schettini, published in 2003 in the Proceedings of SPIE Vol. 5008 on "Color Imaging: Device-Independent Color, Color Hardcopy, and Applications VII", presents a method to determine GBDs.

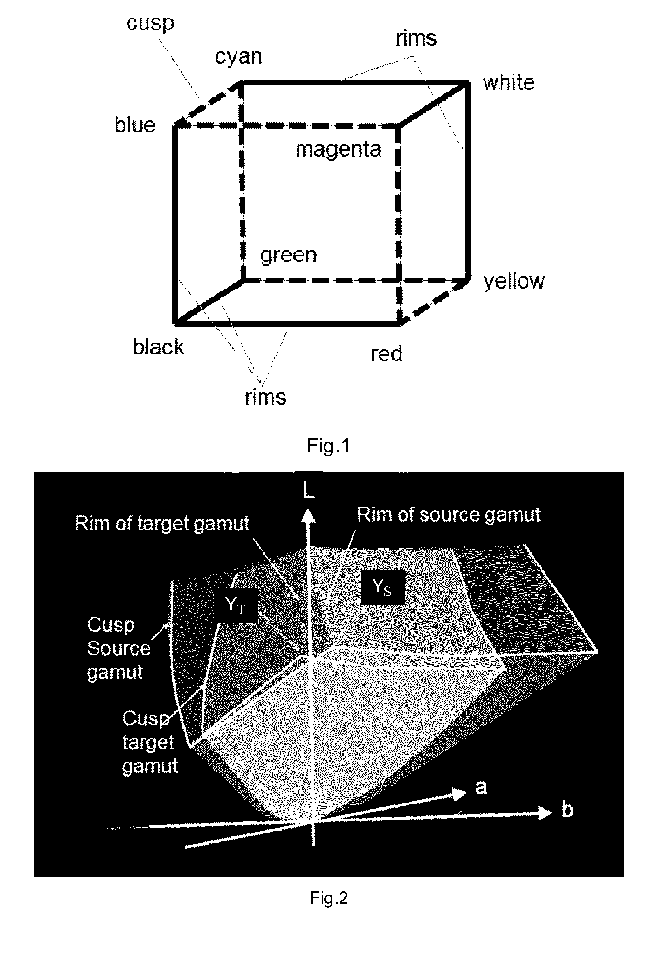

As illustrated by dotted lines on figure 1 in a RGB color space, in case of a color gamut of a trichromatic display or a trichromatic camera, "cusp lines" of a color gamut usually correspond to singular lines ("edges") of this gamut linking each primary color of this display or camera with a secondary color having this primary color as a component, namely a singular line linking : red with yellow, red with magenta, green with yellow, green with cyan, blue with cyan and blue with magenta. The "cusp line" of a color gamut is a line joining cusp colors. When the color gamut is represented in a Lab or JCh color space, a cusp color is a color of maximum Chroma (i.e. maximum saturation) in a 2D plane defined by a constant hue in this color space. Such a plane is generally named "constant hue leaf". More generally, cusp colors correspond to singular points ("vertices") or singular lines ("edges") on the boundary surface that limits a color gamut. The cusp line of a color gamut can be generally modeled as a line forming a closed polygon on the gamut boundary of this color gamut.

As illustrated by solid lines on figure 1 in a RGB color space, the "rims" of a color gamut correspond to the ridges of this color gamut linking the white point of this color gamut to the secondary colors and to the ridges linking the black point of this color gamut to the primary colors. For example, a yellow rim of a color gamut starts at the white point and ends at the yellow secondary color. The colors on this yellow rim include white, yellowish whites, pales yellows, saturated yellows and finally the yellow secondary color itself. Such as the cusp lines of a color gamut, also the rims of a color gamut include generally singular points, that correspond generally with non-continues curvature of the gamut boundary of the color gamut.

On figure 1, cusp lines (dotted lines) and rims (solid lines) of the color gamut are by definition straight lines, because these lines are represented in the RGB color space defined by the device having those primary and secondary colors. The same lines are generally not straight when represented for instance in a Lab color space.

When trying to define a method of color gamut mapping (or Gamut Mapping Algorithm "GMA") source colors inside a source color gamut (having its own source cusp colors and source rims) into target colors such that they are located inside a target color gamut (having its own target cusp colors and target rims), in order to take advantage of the whole range of colors in the target color gamut, it is known to define the GMA according to different conditions among which the following cusp mapping condition: any source cusp color should be mapped into a target cusp color. Such color mapping methods are known as "cusp color gamut mapping".

US2007/236761 discloses a mapping method using the cusp colors of a color gamut. Cusp colors are interpolated from primary and secondary colors of the color gamut. In the disclosed method, a color ([0104] "point A") is mapped (([0104] 'chroma dependent lightness mapping") to a mapped color ([0104] "point B"). The mapped color has a lightness that is closer to the lightness of a cusp point of the constant-hue leaf of the color to map ([0104] "lightness compression toward primary cusp point"). This cusp point is that of a target gamut and is identical to the cusp point of a source gamut of the same hue leaf (Figure 12b: "both cusp points") after a cusp point mapping in this constant-hue leaf ([0059] "the source primary cusp point is mapped to the destination primary cusp point") and after mapping of black and white points of the source gamut to the black and white points, respectively, of the target gamut (Figure 11: "lightness rescaling"). The lightness mapping depends on the unique black point, the unique white point and the unique cusp point in the constant-hue leaf in which the mapping is performed.

A drawback of the color mapping method disclosed in US20070236761 is to be based on a unique cusp point and not at least on two different points, those of source and target color gamuts.

US2005/248784 discloses a color gamut mapping method called shear mapping that maps in a constant-hue LC leaf the cusp of the source gamut to the cusp of the target gamut. However, after the shear mapping, other colors that the cusp colors may still lie outside of the target color gamut. For such a situation, US2005/248784 discloses to further map colors that lie outside the target color gamut to the closest colors of the target color gamut, see figure 10 of US2005/248784. The document EP2375719 discloses also such an additional mapping step.

As a whole, the main drawback of all known cusp color gamut mapping methods operating within a constant-hue leaf is the mismatch between a linear propagation of the mapping of the cusp colors (mapping of cups colors being generally used for the definition of a mapping function for other colors of this leaf) and the non-linearity, i.e. the curvature, of the boundaries of the source and target color gamuts in non-linear device-independent color spaces in which the mapping is performed. Figure 2 illustrates this problem for a source color gamut and a target color gamut represented in the device-independent Lab color space. A constant-hue leaf of this color space usually includes the L axis. The white lines shown on this figure are the cusp line of the source gamut and of the target gamut. Some rims of the source and target gamut are indicated by white arrows. As an example, we will consider two specific constant-hue leaves on this figure: a first leaf including the L axis and the source cusp color located at the intersection $Y_S$ of the cusp line of the source gamut with a rim of the source color gamut and a second leaf including the L axis, too, and the target cusp color

$Y_T$ located at the intersection of the cusp line of the target gamut with a rim of the target color gamut. Within each of these first and second constant-hue leaves, respectively, known definition of usual cusp gamut mapping functions to be applied to any source color of this leaf are based on a linear propagation (or in a proportional manner) of the cusp mapping rule(s) fixed specifically for the mapping of cusp colors in this constant-hue leaf. But, as shown on figure 2, the rim of the source color gamut as well as the rim of the target color gamuts are generally not straight lines in the color space in which the mapping is performed. In fact, generally, the whole boundary of any of the color gamuts, including cusp lines and rims become curved by the non-linearity of the mapping color space, here the Lab color space. In consequence, the rims and the cusp line of a color gamut is often not included in a single constant-hue leaf but pass through different constant-hue leafs. Therefore, when the definition of a gamut mapping function to be applied to source colors of a constant-hue leaf is based on a linear propagation (or in a proportional manner) of such cusp mapping rule(s), this definition does not take into account the position of cusp colors located out of this constant-hue leaf, notably does not take into account the shape of the cusp line. It means that, in fact, the color mapping that is appropriate for a source cusp color in a constant-hue leaf is not always appropriate for the other source colors of this constant-hue leaf. For example, for a source color lying directly on a rim of the source color gamut, there may be a mismatch between the non-linear geometrical properties of this rim - being a ridge of the gamut - and the linear association of the mapping function used to map this source color with the mapping of the cusp color of the same constant-hue leaf, when this cusp color does not belong to this rim and therefore does not have the geometrical properties of this rim. These two different colors - i.e. the source color belonging to the rim and the cusp color - would better need different color mapping rules. When propagated linearly by a shearing operation such as in US2005/248784, lightness information obtained from the cusp colors may be inappropriate to map colors belonging to regions farer away from the cusp line.

Summary of invention

An object of the invention is to avoid the aforementioned drawbacks.

For this purpose, a subject of the invention is a method of color gamut mapping source colors into targets colors from the source color gamut of a source color device towards a target color gamut in a non-linear gamut mapping color space,

said method comprising, for each source color to map :

- obtaining a source cusp color and a target cusp color associated with said source color,
- mapping the lightness L of said source color into a lightness L' of a target color according to a lightness mapping function (f) satisfying a cusp lightness condition according to which $f\left(C_C^{SOURCE}, L_C^{SOURCE}\right) = L_C^{TARGET}$ ,

where $C_C^{SOURCE}$ and $L_C^{SOURCE}$ are respectively the chroma and the lightness of said source cusp color associated with said source color,

where $L_C^{TARGET}$ is the lightness of said target cusp color associated with said source color,

wherein said source cusp color corresponds:

- to an intersection of a source cusp line with a source plane defined in the linear source device-based color space of said source color device as comprising said source color to map, a white point and a black point of said source color gamut; or,
- to a color which is located between a first intersection of said source cusp line with said source plane which is closer to said white point than to said black point and a second intersection of said source cusp line with said plane which is closer to said black point than to said white point,

wherein said source cusp line is defined as a polygon linking different vertices, wherein each of said vertices corresponds to a color of said source color gamut having, in the constant-hue leaf comprising this color, the highest chroma compared to other colors of said source color gamut lying in said leaf, and wherein said target cusp color is a color located on a target cusp line defined as a polygon linking different vertices, wherein each of said vertices corresponds to a color of said target color gamut having, in the constant-hue leaf comprising this color, the highest chroma compared to other colors of said target color gamut lying in said leaf.

This source color device can be any real or virtual device for the reproduction of color images, as a monitor, a TV set, a tablet or a smartphone.

In summary, for the mapping in a non-linear color space of each source color, a source cusp color and a target cusp color are defined in a linear device-based color space and used to define a cusp lightness condition that the lightness mapping function used for the mapping should satisfy. Generally, the source and target cusp colors do not have the same hue as the source color to map.

Generally, the hue of said source color to map is different from the hue of said source cusp color and/or from the hue of said target cusp color.

In a first variant, source cusp color associated with said source color to map corresponds to the intersection of said source cusp line with said source plane which is closer to said white point than to said black point when said source color is closer to said white point than to said black point, or corresponds to the intersection of said source cusp line with said source plane which is closer to said black point than to said white point when said source color is closer to said black point than to said white point.

In a second variant in which said source cusp color corresponds to a color which is located between said first intersection and said second intersection, the distance from said first intersection is preferably proportional to the distance measured in said linear source device-based color space between said source color and said white point.

In another first variant, said target cusp color is defined as having the same hue as the hue of said source cusp color.

In another second variant where said target color gamut is the color gamut of a target color device defining a linear target device-based color space, said **target** cusp color corresponds:

- to an intersection of said target cusp line with a target plane defined in said linear target device-based color space as comprising said source cusp color, a white point and a black point of said target color gamut, or
- to a color which is located between a first intersection of said target cusp line with said target plane which is closer to said white point than to said black point of said target color gamut and a second intersection of said source cusp line with said target plane which is closer to said black point than to said white point of said target color gamut.

An object of the invention is also a color mapping device for mapping source colors of a content which are provided in the source color gamut of a source color device into targets colors of a target color gamut, comprising :

- a cusp line computing module configured to obtain a source cusp line formed by a polygon linking different vertices, wherein each of said vertices corresponds to a color of said source color gamut having, in the constant-hue leaf comprising this color, the highest chroma compared to other colors of said source color gamut lying in said leaf, and configured to obtain a target cusp line formed by a polygon linking different vertices, wherein each of said vertices corresponds to a color of said target color gamut having, in the constant-hue leaf comprising this color, the highest chroma compared to other colors of said target color gamut lying in said leaf,
- a cusp color computing module **configured to obtain,** for each source color to map, an associated source cusp color **corresponding to** an intersection of a source cusp line provided by said cusp line computing module with a source plane defined in the linear source device-based color space of said source color device as comprising said source color to map, a white point and a black point of said source color gamut, or **corresponding to** a color which is located between a first intersection of said source cusp line with said source plane which is closer to said white point than to said black point and a second intersection of said source cusp line with said source plane which is closer to said black point than to said white point **and configured to obtain,** for each source color to map, a target cusp color defined as a color located on target cusp line provided by said cusp line computing module,
- a lightness-mapping function definition module configured to define, for each source color to map, a lightness mapping function satisfying a cusp lightness condition according to which $f\left(C_C^{SOURCE}, L_C^{SOURCE}\right) = L_C^{TARGET}$ ,

where $C_C^{SOURCE}$ and $L_C^{SOURCE}$ are respectively the chroma and the lightness of source cusp color associated with said source color provided by said cusp color computing module,

where $L_C^{TARGET}$ is the lightness of target cusp color associated with said source color provided by said cusp color computing module, - a lightness-mapping module configured to apply to each source color to map the lightness-mapping function $f(C,L)$ associated with said source color provided by said lightness-mapping function definition module.

An object of the invention is also a processor readable medium having stored therein instructions for causing a processor to perform the above method of color gamut mapping, and a computer-readable program comprising computer-executable instructions to enable a computer to perform the above method of color gamut mapping.

The cusp-oriented color gamut mapping method according to the invention is notably applicable to professional color processing software, when the colorist needs to be free to choose any chroma variations.

Brief description of drawings

The invention will be more clearly understood on reading the description which follows, given by way of non-limiting example and with reference to the appended figures in which:

- Figure 1 illustrates the cusp line and the rims of a color gamut in a device-based color space ;
- Figure 2 illustrates a source color gamut and a target color gamut in the Lab color space;
- Figure 3 is a diagram illustrating an embodiment of a color gamut mapping method according to the invention;
- Figure 4 illustrates in the Lab color space an example of obtaining of a source cusp color according to a step of the embodiment of figure 3;
- Figure 5 illustrates the color mapping of a source color according to the embodiment of figure 3.

Description of embodiments

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage. Other hardware, conventional and/or custom, may also be included.

Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

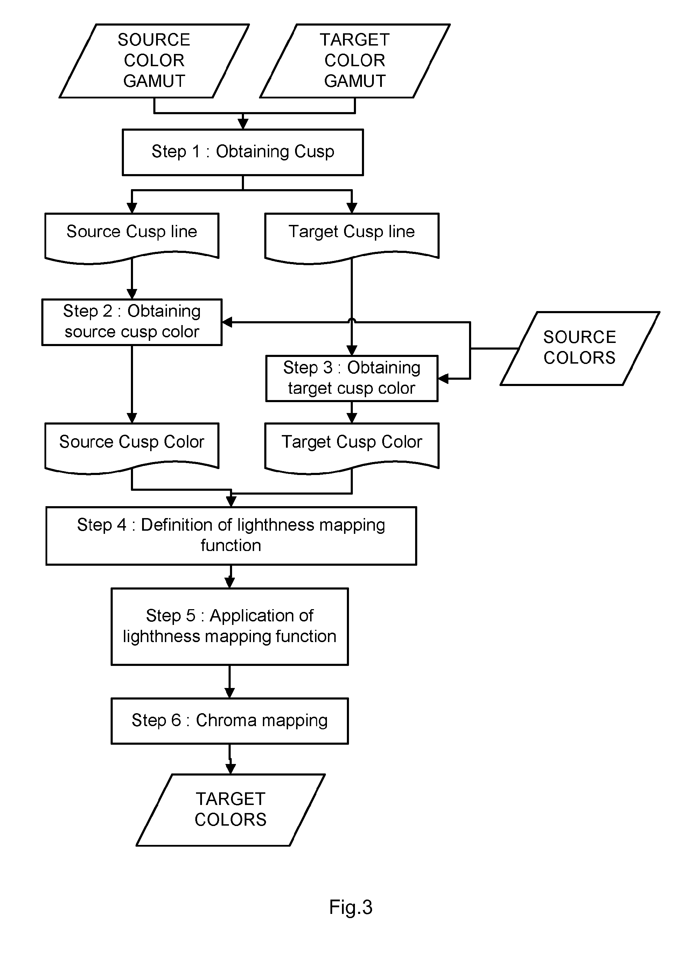

A specific embodiment of the cusp color gamut mapping method according to the invention will now be described in reference to figure 3.

As **mapping color space,** the Lab color space is chosen. In this color space, colors can also be represented by polar coordinates, i.e. in a LCh mode, with L for the same lightness, h for a hue angle according to:

$$
h = \begin{cases}
atan\left(b/a\right) & a > 0 \wedge b > 0 \\
\pi/2 - atan\left(a/b\right) & a \leq 0 \wedge b > 0 \\
3\pi/2 - atan\left(a/b\right) & a > 0 \wedge b \leq 0 \\
\pi + atan\left(b/a\right) & a \leq 0 \wedge b \leq 0
\end{cases}
$$

corresponding to the angle between a vector having a, b as coordinates and the a-axis, $C = \sqrt{a^2 + b^2}$ corresponding to the chroma. Chroma reflects the saturation of a color. The higher the C value the more saturated is the color. The hue angle may be also named $\alpha_H$.

Furthermore, the below embodiment concerns a hue-preserving cusp color gamut mapping. This means that the color mapping is not actually carried out in three dimensions in Lab space but in two dimensions in a constant-hue leaf of the Lab space, i.e. in a 2D LC sub-space. The hue defining the constant-hue leaf in which the color mapping is to be performed is chosen to be the hue of the source color to be mapped.

The source GBD used to describe the source color gamut comprising source colors to map is based in a manner known per se on a mesh of triangles, each triangle being defined by the position of its three vertices in the mapping color space, these vertices being source colors located on the boundary of the color gamut. The source color gamut can correspond to a specific or standard display device such as a LCD or an OLED panel, to a specific content to map, to an image capture device such as a camera or a scanner, or to any other color device.

The target GBD used to describe the target color gamut that should comprises all mapped colors is also based in a manner known per se on a mesh of triangles, each triangle being also defined by the position of its three vertices in the mapping color space, these vertices being target colors located on the boundary of the color gamut. The target color gamut can correspond for instance to a specific or standard display device.

Gamut Boundary Descriptions can be convex or non-convex, but in the embodiment below, it is assumed that source and target GBDs are both approximately convex.

Furthermore, the black and white points of the two color gamuts are supposed to be known. In device-based color spaces such as a RGB color space of a reproduction device, when the color coordinates R,G,B of a color to reproduce are small, the color reproduced by the device has usually a small intensity and vice versa. Black and white points in such a color space are defined by having R,G,B color coordinates that are the smallest and the largest, respectively. For example, in normalized RGB color space, the coordinates of respectively the black point Bl and the white point Wh are: 0,0,0 and 1,1,1. In an absolute 8bit encoded RGB space, Bl and Wh are usually at 0,0,0 and 255,255,255, respectively. If the range of color coordinates that can be reproduced by the device is reduced, the black point Bl and the white point Wh may be at 4,4,4 and 251,251,251, respectively.

1st step : Obtaining cusp lines of the source and target color gamuts

The cusp line of each color gamut is defined by a line joining all cusp colors of this color gamut, where each cusp color is defined to be the color of this color gamut with highest color chroma C (or saturation) compared to all other colors of this color gamut lying in the constant-hue leaf having the same hue as this cusp color. Using GBDs based on triangles represented by their vertices as defined above, the cusp line of a color gamut is then described by a series of vertices of these triangles forming a closed polygon that circumscribes in a certain manner the gamut boundary description.

In the implementation described below, the same method of obtaining the cusp colors is used for the source color gamut and for the target color gamut, namely the method described by Stauder et. al. in their article entitled "Gamut Mapping for Motion Picture" published at the Conference on Colour in Graphics, Imaging and Vision, June 14-18, 2010. In order to obtain the cusp line of each of the source and target color gamuts from their GBDs, the following steps described in this article are implemented:

1. Detection of a first current cusp vertex as the vertex of the gamut boundary description (GBD) having the highest color saturation C;

2. For each of neighboring vertices of this GBD located in the neighborhood of this current cusp vertex, calculation of the value of a quality criterion (example of a definition is given further down), said neighborhood being defined by all vertices that are linked to the current cusp vertex by an edge of a triangle of this GBD;

3. From these neighboring vertices, selection of the vertex of the neighborhood having the highest value of this quality criterion as being a cusp color of the cusp line,

4. If this selected vertex satisfies a stop criterion (example of a definition is given further down), the whole cusp line of this color gamut is considered as obtained; if the stop criterion is not satisfied, the selected vertex is overtaken as current cusp vertex and steps 2 to 4 above are reiterated up to a last selected vertex satisfies the stop criterion.

From the first current cusp vertex up to the last selected vertex of all iterations of the above steps, a succession of cusp vertices defining **cusp colors** is then obtained, said succession forming a closed polygon that **describe the cusp line** which circumscribes in a certain manner the color gamut and describes the cusp line of the color gamut.

The same process is applied for the source color gamut and for the target color gamut to get respectively a source cusp line and a target cusp line.

Still in reference to the article from Stauder et al. already quoted above, an example of definition of a **quality criterion K** will now be given, based on a combination of four sub criteria, which are : a saturation criterion $K_S$, a lightness similarity criterion $K_I$, a hue angle increase criterion $K_H$, and a collinearity criterion $K_D$.

The **saturation criterion** $K_S$ is defined such as to find the most saturated cusp vertices of a neighborhood.

The value of the saturation criterion $K_S$ of a vertex V belonging to the neighborhood of a current cusp vertex $\widehat{V}$ is defined as follows:

$$K_S = \frac{C\left(1 + D/c_2\right)}{c_1}$$

where $V = \begin{pmatrix} L \\ a \\ b \end{pmatrix}$, $\widehat{V} = \begin{pmatrix} \widehat{L} \\ \widehat{a} \\ \widehat{b} \end{pmatrix}$,

where $D = \left| V - \widehat{V} \right| = \sqrt{\left(L - \widehat{L}\right)^2 + \left(a - \widehat{a}\right)^2 + \left(b - \widehat{b}\right)^2}$ is the distance, in the Lab color space, between the neighboring vertex V and the current vertex $\widehat{V}$, and where the values for the constant coefficients $c_1$, $c_2$ can be for instance $c_1$ =150 and $c_2$ = 50.

The **lightness similarity criterion** $K_l$ is defined such as to find cusp vertices of a neighborhood having a similar lightness L along the cusp line. The value of the lightness similarity criterion $K_l$ of a vertex $V$ belonging to the neighborhood of a current cusp vertex $\widehat{V}$ is based on the difference between the intensities of the neighboring vertex $L$ and the current vertex $L$ and is defined as follows :

$$K_I = 1 - \frac{\left(L - \widehat{L}\right)^2}{\left(c_3\right)^2}\left(1 + D / c_2\right),$$

where the value for the constant coefficient $c_3$ may be for instance $c_3$ =100.

The **hue angle increase criterion** $K_H$ is defined such as to find cusp vertices of a neighborhood that increase in hue angle, in order to get a cusp line description formed by a closed and smooth cusp polygon. The value of the hue angle increase criterion $K_H$ of a vertex $V$ belonging to the neighborhood of a current cusp vertex $\widehat{V}$ is defined as follows :

$$K_H = \frac{\alpha_H - \widehat{\alpha}_H}{c_4}$$

where $\widehat{\alpha}_H$ is the hue angle of the vertex $V$, defined as equal to

$$\alpha_H = \begin{cases} atan\left(b/a\right) & a > 0 \wedge b > 0 \\ \pi/2 - atan\left(a/b\right) & a \leq 0 \wedge b > 0 \\ 3\pi/2 - atan\left(a/b\right) & a > 0 \wedge b \leq 0 \\ \pi + atan\left(b/a\right) & a \leq 0 \wedge b \leq 0 \end{cases}$$

where is the hue angle of the vertex $V$ that is defined in the same manner as $\alpha_H$ while using the coordinates $\widehat{a}$, $\widehat{b}$ instead of a,b, respectively,

where the value for the constant coefficient $c_4$ can be for instance $c_4$ = 90.

The **collinearity criterion** $K_D$ is defined such as to find cusp vertices of a neighborhood in a direction as close as possible to the direction of the previous iteration of the method as defined above to obtain the cusp line, in order to still improve the smoothness of the cusp polygon. The value of the collinearity criterion $K_D$ of a vertex V belonging to the neighborhood of a current cusp vertex $\widehat{V}$ which has been itself selected in a previous iteration in the neighborhood of a previous current cusp vertex $V'''$ is defined for instance as follows:

$$K_D = 1 - \frac{\alpha_D}{c_5}$$

where $\alpha_D = \angle\{d; \hat{d}\}$, i.e. the angle between a first direction vector $\hat{d} = \hat{V} - V^m$ and a second direction vector $d = V - \hat{V}$,

and where the value for the constant coefficient $c_5$ can be for instance $c_5$ = 90.

The value of the **quality** criterion K of a vertex V belonging to the neighborhood of a current cusp vertex $\hat{V}$ is then calculated for instance according to the formula:

$$K = c_S K_S + c_H K_H + c_I K_I + c_D K_D + c_C K_C,$$

where the value for the weight coefficient s are for instance $c_S$ = 5, $c_H$ = 5, $c_I$ = 2 and $c_D$ = 2.

Still in reference to the article from Stauder et al. already quoted above, an example of definition of a **stop criterion** to be applied to a "next cusp vertex" will now be given as follows :

- Either, the "next cusp vertex" is identical with the first cusp vertex, i.e. the current cusp vertex of the first iteration;
- Or the "next cusp vertex" has an associated hue angle $\alpha_H$ that is larger than the hue angle of this first cusp vertex augmented by 360 degrees.

<u>2nd</u> step : for each source color to map, obtaining an associated source cusp color $M_C^{SOURCE}$ :

Once a cusp line is obtained as described above for the source color gamut, then, **for each of the source colors** to map having Rs,Gs,Bs color coordinates in a RGB source device-based color space of a source color device having the source color gamut as color gamut, and $L_s, a_s, b_s$ coordinates in a device-independent color space, a source cusp color $M_C^{SOURCE}$ associated with each source color will be searched in this device-based color space. As explained below, this source cusp color has generally not the same hue as the source color.

The source cusp color associated with a given source color is searched for instance according to a method comprising the following sub-steps:

- 1) defining a first intermediate cusp color Ic1 and a second intermediate cusp color Ic2 as respectively the first and the second intersections of the **source cusp line** with a source plane defined in the source device-based color space as comprising said source color, the white point and the black point of the source color device, where the first intermediate cusp color Ic1 is chosen to be the intersection that is closer to the white point and the second intermediate cusp color Ic2 is chosen to be the intersection that is closer to the black point.
- 2) determining the source cusp color $M_C^{SOURCE}$ in relationship with the first and second intermediate cusp colors Ic1, Ic2. Preferably, the source cusp color $M_C^{SOURCE}$ is defined to be the first intermediate cusp color Ic1 if the source color is closer to the white point than to the black point, and the source cusp color $M_C^{SOURCE}$ is defined to be the second intermediate cusp color Ic2 if the source color is closer to the black point than to the white point.

In a variation, the source cusp color $M_C^{SOURCE}$ is defined as a color located on the source cusp line between the first and second intermediate cusp colors Ic1, Ic2. For instance, this source cusp color $M_C^{SOURCE}$ is defined by its distance $d_1$ from the first intermediate cusp colors Ic1, measured on this cusp line. This distance $d_1$ is for instance calculated from the distance $d_2$ between Ic1 and Ic2 measured on this cusp line, from the distance $d_W$ between the source color and the white point, and from the distance $d_B$ between the source color and the black point. For example, $d_1$ can be calculated by a linear equation according to

$$d_1 = \frac{d_W}{d_B + d_W} d_2,$$

but non-linear equations can be used too, for example:

$$d_1 = \left(\frac{d_W}{d_B + d_W}\right)^2 d_2.$$

The source cusp color $M_C^{SOURCE}$ has generally not the same hue as the source color itself. This can be explained using the following example. In this example, we select a source color different from the yellow secondary color and lying on the yellow of the source color gamut, i.e. the starting at the white point and ending at the yellow secondary color. According to the main method above (1st and 2nd sub-steps), the yellow secondary color is the source cusp color $M_C^{SOURCE}$ associated with this source color lying on the yellow rim. This rim is a straight line in RGB color space, but, as the transformation between RGB color space and Lab color space is non-linear, this yellow rim is a curved line in Lab space. Colors on a curved line in Lab space have different hues. It means that the yellow secondary color (source cusp color $M_C^{SOURCE}$ ) and the source color lying on the yellow rim do not have the same hue.

The searching method above has the advantage of simplicity because, in the device-based color space in which the search method is implemented, the rims and the cusp lines of the source color gamut are often straight lines, such as shown for the RGB color space on figure 1.

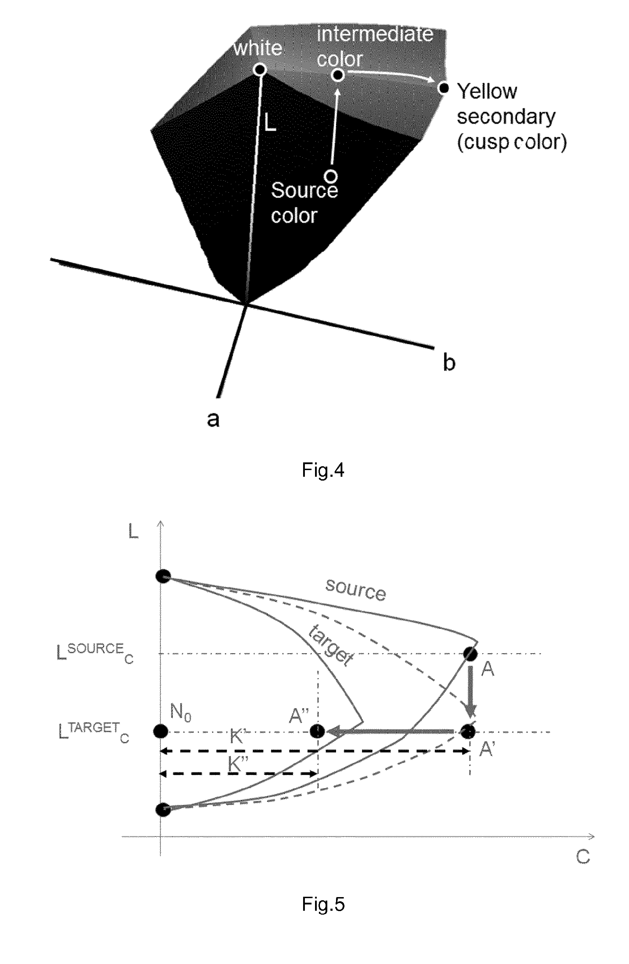

Another example of implementation of the search method above will be described in reference to figure 4 for a specific source color close to the yellow rim linking the white point and the secondary yellow color. As shown on figure 4, the example is about a source color that it is closer to the white point than to the black point, this source color is even close to the yellow rim but has a slightly smaller lightness than this rim. In this example, the source plane defined in the device-based color space as including this source color, the black point and the white point, includes also the whole yellow rim. When implementing the search method above (sub-steps 1 and 2), the source cusp color $M_C^{SOURCE}$ which is found is the yellow secondary color. Then, the source cusp color of a source color gamut that is obtained in association with a source color located near a rim correspond generally to the primary or secondary color of this source color gamut that lies at the intersection of this rim with the cusp line.

Another embodiment of the search method above using the device-based color space of the source color device having the source color gamut is detailed below. Looking at figure 1 can help to understand. Searching the source cusp color $M_C^{SOURCE}$ associated with a source color will for instance comprise the following steps:

- in the RGB color space, color coordinates of intersections of the boundary of the RGB cube, i.e. the source color gamut, with a straight line going through the source color Rs,Gs,Bs and parallel to the RBG cube diagonal, i.e. parallel to the line of grey colors starting at the black point and ending at the white point, are computed : Ri1,Gi1,Bi1 color coordinates of a first intersection closer to the white point and Ri2,Gi2,Bi2 color coordinates of a second intersection I2 closer to the black point are obtained; the first intersection corresponds to a first intermediate color I1 and the second intersection corresponds to a second intermediate color I2;
- in the RGB color space, color coordinates $R_{c1},G_{c1},B_{c1}$ of a third intersection of a first defining line positioned on the boundary of the source color gamut, **anchored on the white** point and going through the first intermediate color I1 with the first source cusp line found on the path of this first defining line are then computed; this third intersection corresponds to a first intermediate cusp color Ic1; in the RGB color space, this first defining line is a straight line which lies on a plane face of the RGB cube comprising the white point; as shown on figure 1, any edge of such a face opposite to the white point is a cusp line (dotted line) ;
- similarly, color coordinates $R_{c2},G_{c2},B_{c2}$ of a fourth intersection of a second defining line positioned on the boundary of the source color gamut, **anchored on the black** point and going through the second intermediate color I2 with the first source cusp line found on the path of this second defining line are then computed ; this fourth intersection corresponds to a second intermediate cusp color Ic2; in the RGB color space, this second defining line is a straight line which lies on a plane face of the RGB cube comprising the black point; as shown on figure 1, any edge of such a face opposite to the black point is a cusp line (dotted line);
- in the RGB color space, the distance d1 between the white point and the source color and the distance d2 between the black point and the source color are computed;

- color coordinates $R_{cS}$, $G_{cS}$, $B_{cS}$ of a source cusp color $M_C^{SOURCE}$ associated with the source color are then computed according to the equation:

$$\begin{pmatrix} R_{cS} \\ G_{cS} \\ B_{cS} \end{pmatrix} = \frac{d1}{d1+d2} \begin{pmatrix} R_{c1} \\ G_{c1} \\ B_{c1} \end{pmatrix} + \frac{d2}{d1+d2} \begin{pmatrix} R_{c2} \\ G_{c2} \\ B_{c2} \end{pmatrix}.$$

When there is only one intersection of the boundary of the RGB cube with a straight line going through the source color Rs,Gs,Bs and parallel to the RBG cube diagonal, then this intersection is already the associated source cusp color $M_C^{SOURCE}$. In such a situation, the associated cusp color $M_C^{SOURCE}$ corresponds to a vertex of the RGB cube.

When using the main and first searching method above (with two sub-steps), the source cusp color $M_C^{SOURCE}$ that is obtained is then located on a cusp line of the source color gamut. The color coordinates $R_{cS}$, $G_{cS}$, $B_{cS}$ of this source cusp color $M_C^{SOURCE}$ in the RGB color space of the source color device are then transformed in a manner known per se into color coordinates $L_B^{SOURCE}$, $a_C^{SOURCE}$, $b_C^{SOURCE}$ in the $L_{ab}$ color space. Such a change of color space can be for instance performed in two steps, a first well known step from the RGB color space to the XYZ color space which depends on the source color device, and a second step from the XYZ color space to the Lab color space using the well-known formulas proposed in 1973 by the CIE. As already shown above, the source color **does not generally belong to the same constant-hue leaf** as its associated source cusp color.

For colors lying on the straight line between black and white in RGB color space, the 2nd sub-step described above is not applied. Such colors correspond in Lab space usually to colors lying on the L axis. For those colors, no associated source cusp color $M_C^{SOURCE}$ is determined. For this reason, no lightness mapping will be applied to those colors as will be described below.

3rd step : for each source color to map, obtaining an associated target cusp color $M_C^{TARGET}$ :

A target cusp color $M_C^{TARGET}$ associated with the source color, having $L_B^{TARGET}$, $a_C^{TARGET}$, $b_C^{TARGET}$ as coordinates is defined as a color located on the target **cusp line** having the same hue $h_C^{TARGET}$ as the hue $h_C^{SOURCE}$ of the associated source cusp color $M_C^{SOURCE}$. It means that we have:

$$h_C^{SOURCE} = h_C^{TARGET}$$

The source cusp color $M_C^{SOURCE}$ and the target cusp color $M_C^{TARGET}$ associated with the same source color that are obtained through the above methods are then positioned on the same constant-hue leaf.

As an alternative for searching a target cusp color, the target cusp color $M_C^{TARGET}$ associated with the source color is searched using the method above (second step) of searching the source cusp color, but where the source cusp color $M_C^{SOURCE}$ is used as a basis instead of the source color. A target device-based color space of a target color device having the target color gamut as color gamut is defined.

More precisely, the target cusp color associated with a given source color is searched for instance according to a method comprising the following sub-steps:

- 1) defining a third intermediate cusp color Ic3 and a fourth intermediate cusp color Ic4 as respectively the first and the second intersections of the **target cusp line** with a target plane which is defined in the target device-based color space as comprising the source cusp color $M_C^{SOURCE}$, the white point and the black point of this color space, where the third intermediate cusp color Ic3 is chosen to be the intersection that is closer to the white point in this target device-based color space and the fourth intermediate cusp color Ic4 is chosen to be the intersection that is closer to the black point.

- 2) determining the target cusp color $M_C^{TARGET}$ in relationship with the third and fourth intermediate cusp colors Ic3, Ic4. Preferably, the target cusp color $M_C^{TARGET}$ is defined to be the third intermediate cusp color Ic3 if the source cusp color $M_C^{SOURCE}$ is closer to the white point than to the black point, in this target device-based color space, and the target cusp color $M_C^{TARGET}$ is defined to be the fourth intermediate cusp color Ic4 if the source cusp color $M_C^{SOURCE}$ is closer to the black point than to the white point.

Contrary to the other method of obtaining a target cusp color above, the hue of the target cusp color $M_C^{TARGET}$ obtained through this variation is generally different from the hue of its associated source cusp color $M_C^{SOURCE}$ .

<u>4<sup>th</sup> step : for each source color to map, definition of a lightness mapping function specific to this source color</u>

Once the source cusp color $M_C^{SOURCE}$ and the target cusp color $M_C^{TARGET}$ associated with a source color to map are determined as described above, a lightness-mapped color can be defined, for instance using a lightness mapping function as described in the article entitled "Motion Picture Versioning by Gamut Mapping" by J.Stauder et al., published in November 2010 in the Eighteenth Color and Imaging Conference: Color Science and Engineering Systems, Technologies, and Applications, San Antonio, Texas, p. 178-183. A variation of the method described in this article is described below.

In reference to figure 5, the lightness mapping function f that will be used to map the lightness L of this source color is defined as satisfying the following so-called "cusp lightness condition": a source color A having the same lightness and chroma - but a different hue - as respectively the lightness $L_C^{SOURCE}$ and the chroma $C_C^{SOURCE}$ of the source cusp color associated with this source color as defined in the 2<sup>nd</sup> step above would have been lightness mapped to a color A' having the same lightness as the lightness $L_C^{TARGET}$ of the target cusp color associated with this source color as defined in the 3<sup>rd</sup> step above. It means that, the function f is defined such that $f\left(C_C^{SOURCE}, L_C^{SOURCE}\right) = L_C^{TARGET}$ . Taking this cusp lightness condition into consideration, the lightness mapping function f is then for instance defined according to the following equation:

$$f(C,L) = L + s \qquad \text{(Eq.1),}$$

where the linear lightness offset s is defined as follows:

$$s = tu\left(L_C^{TARGET} - L_C^{SOURCE}\right) \qquad \text{(Eq.2)}$$

where the linear lightness weight t and the linear chroma weight u are defined as follows:

$$t = \begin{cases} \dfrac{L - L_B^{SOURCE}}{L_C^{SOURCE} - L_B^{SOURCE}} & if \quad L \leq L_C^{SOURCE} \\ \dfrac{L_W^{SOURCE} - L}{L_W^{SOURCE} - L_C^{SOURCE}} & if \quad L > L_C^{SOURCE} \end{cases} \qquad \text{(Eq.3A)}$$

$$u = \dfrac{C}{C_C^{SOURCE}} \qquad \text{(Eq.3B)}$$

where L and C are respectively the lightness and the chroma of the source color to be mapped, where $C_C^{SOURCE}$ is the chroma of the source cusp color $M_C^{SOURCE}$ associated with this source color.

<u>5th step : Lightness mapping of the source color by application of the lightness mapping function</u>

The lightness mapping function $f(C,L)$ as defined above in association with the source color to map is then applied to the lightness and chroma of this source color.

In reference to figure 5, if this source color A is represented in the mapping color space Lab by the following coordinates : $A = \begin{pmatrix} L \\ a \\ b \end{pmatrix}$, the resulting mapped color A' has the coordinates $A' = \begin{pmatrix} L' = f(C,L) \\ a' = a \\ b' = b \end{pmatrix}$ with $C = \sqrt{a^2 + b^2}$.

The amount of lightness mapping of the source color A is controlled by the difference between $L_C^{SOURCE}$ and $L_C^{TARGET}$ as well as by the chroma C of the source color A compared to the chroma $C_C^{SOURCE}$ of the associated source cusp color $M_C^{SOURCE}$ .

<u>6th step : chroma mapping</u>

Still in reference to figure 5, the lightness mapped color A' which is obtained at the end of the previous step is an intermediate mapped color. Notably when the intermediate mapped color A' that is obtained through the previous step of lightness mapping is not located within the target color gamut, this color A' is finally chroma mapped into a target color A" in a way that this target color is inside the target color gamut.

To illustrate such a chroma mapping in reference to figure 5, an intermediate mapped color A' is chroma mapped into a target color A" in direction to a so-called anchor point $N_0$. In the specific embodiment, this anchor point is positioned on the Lightness axis and has the following coordinates: $N_0 = \begin{pmatrix} L_0 = L' \\ a_0 = 0 \\ b_0 = 0 \end{pmatrix}$ and straight lines anchored on this anchor point are chosen as mapping trajectories for the chroma mapping step. In this specific case, the second mapping does not impact the lightness of the colors. Such a chroma mapping can be described as a modification of distance K' between an intermediate mapped color A' and the anchor point $N_0$ into a distance K" between the target color A" and the same anchor point $N_0$. A' is then chroma mapped into A".

Any other known algorithms can be used for this chroma mapping, such as gamut compression, gamut clipping or gamut expansion.

For intermediate mapped colors located within the target color gamut, this 5th step may be optional, notably when these intermediate mapped colors populate regularly the target color gamut.

As a conclusion, the implementation of the second to fifth steps above for **each of the source colors** using the cusp lines of the source and target color gamuts obtained by the 1st step leads to a global color gamut mapping of all source colors of a content to map from the source color gamut in which they are located to target colors that are located inside the target color gamut. The fourth and fifth steps above can be merged in one step of color gamut mapping impacting both the lightness and the chroma of source colors to map.

The method of cusp color gamut mapping described above propose to compute the mapping on the basis of a source cusp color and of a target cusp color that are specific to each source color to map and that do not belong to the same constant-hue leaf as this source color. Moreover, this method proposes to obtain these source and target cusp colors by a method which circumvents the drawbacks of the non-linear color space in which the mapping is performed, because this obtaining method is implemented in a linear device-based color space. This obtaining method has the advantage of simplicity because, in this device-based color space, the rims and the cusp lines of the source color gamut are generally straight lines.

An advantage of this method is that the geometrical constellation of each source color with respect to the curved source and target color gamut boundaries is taken into account to choose appropriate corresponding source and target cusp colors having a similar geometric constellation and then deriving the mapping function for the source using these cusp colors. In this way the source color is mapped in accordance with cusp colors having a similar geometrical constellation than the source color.

According to a **hardware aspect,** the invention relates to a device for mapping source colors of a content which are provided in a source color gamut of a source color device having a black point and a white point into targets colors of a target color gamut.

This color mapping device comprises:

- a cusp line computing module configured to obtain a source cusp line formed by a polygon linking different vertices, wherein each of said vertices corresponds to a color of said source color gamut having, in the constant-hue leaf comprising this color, the highest chroma compared to other colors of said source color gamut lying in said leaf, and configured to obtain a target cusp line formed by a polygon linking different vertices, wherein each of said vertices corresponds to a color of said target color gamut having, in the constant-hue leaf comprising this color, the highest chroma compared to other colors of said target color gamut lying in said leaf,

- a cusp color computing module configured to obtain, for each source color to map, an associated source cusp color $M_C^{SOURCE}$ corresponding to an intersection Ic1 or Ic2 of a source cusp line provided by said cusp line computing module with a source plane defined in the linear source device-based color space of said source color device as comprising said source color to map, said white point and said black point, and configured to obtain, for each source color to map, a target cusp color $M_C^{TARGET}$ defined as a color located on target cusp line provided by said cusp line computing module,

- a lightness-mapping function definition module configured to define, for each source color to map, a lightness mapping function f satisfying a cusp lightness condition according to which $f\left(C_C^{SOURCE}, L_C^{SOURCE}\right) = L_C^{TARGET}$ , where $C_C^{SOURCE}$ and $L_C^{SOURCE}$ are respectively the chroma and the lightness of source cusp color $M_C^{SOURCE}$ associated with said source color provided by said cusp color computing module, where $L_C^{TARGET}$ is the lightness of target cusp color $M_C^{TARGET}$ associated with said source color provided by said cusp color computing module,

- a lightness-mapping module configured to apply to each source color to map the lightness-mapping function $f(C,L)$ associated with said source color provided by said lightness-mapping function definition module.

The above modules are functional units that may or may not correspond to physically distinguishable units. For example, these modules or some of them can be grouped together in a single component or circuit, or constitute functions of the same software. On the contrary, some modules may be composed of separate physical entities.

This color mapping device is implemented according to a purely hardware embodiment, for example in the form of a dedicated component (for example in an ASIC (application specific integrated circuit) or FPGA (field-programmable gate array) or VLSI (very large scale integration) or of several electronic components integrated into a device or even in the form of a mixture of hardware elements and software elements.

While the present invention is described with respect to a particular embodiment, it is understood that the present invention is not limited to the above embodiments. The present invention as claimed therefore includes variations from the embodiments described herein, as will be apparent to one of skill in the art.

It is to be further understood that, because some of the constituent system components and methods depicted in the accompanying drawings are preferably implemented in software, the actual connections between the system components or the process function blocks may differ depending upon the manner in which the invention is implemented.

**Claims**

1. Method of color gamut mapping source colors into targets colors from the source color gamut of a source color device towards a target color gamut in a non-linear gamut mapping color space,
   said method comprising, for each source color to map:

   - obtaining a source cusp color $\left( M_C^{SOURCE} \right)$ and a target cusp color $\left( M_C^{TARGET} \right)$ associated with said source color,

   - mapping the lightness L of said source color into a lightness L' of a target color according to a lightness mapping function (f) satisfying a cusp lightness condition according to which $f\left(C_C^{SOURCE}, L_C^{SOURCE}\right) = L_C^{TARGET}$ ,

where $C_C^{SOURCE}$ and $L_C^{SOURCE}$ are respectively the chroma and the lightness of said source cusp color $\left(M_C^{SOURCE}\right)$ associated with said source color,

where $L_C^{TARGET}$ is the lightness of said target cusp color $\left(M_C^{TARGET}\right)$ associated with said source color,

wherein said source cusp color $\left(M_C^{SOURCE}\right)$ corresponds:

- to an intersection (Ic1, Ic2) of a source cusp line with a source plane defined in the linear source device-based color space of said source color device as comprising said source color to map, a white point and a black point of said source color gamut; or,
- to a color which is located between a first intersection (Ic1) of said source cusp line with said source plane which is closer to said white point than to said black point and a second intersection (Ic2) of said source cusp line with said plane which is closer to said black point than to said white point,

wherein said source cusp line is defined as a polygon linking different vertices, wherein each of said vertices corresponds to a color of said source color gamut having, in the constant-hue leaf comprising this color, the highest chroma compared to other colors of said source color gamut lying in said leaf, and wherein said target cusp color $\left(M_C^{TARGET}\right)$ is a color located on a target cusp line defined as a polygon linking different vertices, wherein each of said vertices corresponds to a color of said target color gamut having, in the constant-hue leaf comprising this color, the highest chroma compared to other colors of said target color gamut lying in said leaf.

2.  Method of color gamut mapping according to claim 1 wherein the hue of said source color to map is different from the hue of said source cusp color $\left(M_C^{SOURCE}\right)$ and/or from the hue of said target cusp color $\left(M_C^{TARGET}\right)$.

3.  Method of color gamut mapping according to claim 1 or 2 wherein said source cusp color $\left(M_C^{SOURCE}\right)$ associated with said source color to map corresponds to the intersection (Ic1) of said source cusp line with said source plane which is closer to said white point than to said black point when said source color is closer to said white point than to said black point, or corresponds to the intersection (Ic2) of said source cusp line with said source plane which is closer to said black point than to said white point when said source color is closer to said black point than to said white point.

4.  Method of color gamut mapping according to claim 1 or 2 wherein, when said source cusp color $\left(M_C^{SOURCE}\right)$ corresponds to a color which is located between said first intersection (Ic1) and said second intersection (Ic2), the distance ($d_1$) from said first intersection is proportional to the distance ($d_w$) measured in said linear source device-based color space between said source color and said white point.

5.  Method of color gamut mapping according to any one of claims 1 to 4, wherein said target cusp color $\left(M_C^{TARGET}\right)$ is defined as having the same hue $\left(h_C^{TARGET}\right)$ as the hue $\left(h_C^{SOURCE}\right)$ of said source cusp color $\left(M_C^{SOURCE}\right)$.

6.  Method of color gamut mapping according to any one of claims 1 to 4, wherein said target color gamut is the color gamut of a target color device defining a linear target device-based color space, wherein said **target** cusp color $\left(M_C^{TARGET}\right)$ corresponds:

- to an intersection (Ic3, Ic4) of said target cusp line with a target plane defined in said linear target device-based color space as comprising said source cusp color $\left(M_C^{SOURCE}\right)$, a white point and a black point of said target color gamut, or
- to a color which is located between a first intersection (Ic3) of said target cusp line with said target plane which is closer to said white point than to said black point of said target color gamut and a second intersection (Ic4) of said source cusp line with said target plane which is closer to said black point than to said white point of said target color gamut.

7. Color mapping device for mapping source colors of a content which are provided in the source color gamut of a source color device into targets colors of a target color gamut, comprising:

- a cusp line computing module configured to obtain a source cusp line formed by a polygon linking different vertices, wherein each of said vertices corresponds to a color of said source color gamut having, in the constant-hue leaf comprising this color, the highest chroma compared to other colors of said source color gamut lying in said leaf, and configured to obtain a target cusp line formed by a polygon linking different vertices, wherein each of said vertices corresponds to a color of said target color gamut having, in the constant-hue leaf comprising this color, the highest chroma compared to other colors of said target color gamut lying in said leaf,

- a cusp color computing module **configured to obtain,** for each source color to map, an associated source cusp color $\left( M_C^{SOURCE} \right)$ **corresponding to** an intersection (Ic1, Ic2) of a source cusp line provided by said cusp line computing module with a source plane defined in the linear source device-based color space of said source color device as comprising said source color to map, a white point and a black point of said source color gamut, or **corresponding to** a color which is located between a first intersection (Ic1) of said source cusp line with said source plane which is closer to said white point than to said black point and a second intersection (Ic2) of said source cusp line with said source plane which is closer to said black point than to said white point **and configured to obtain,** for each source color to map, a target cusp color $\left( M_C^{TARGET} \right)$ defined as a color located on target cusp line provided by said cusp line computing module,

- a lightness-mapping function definition module configured to define, for each source color to map, a lightness mapping function (f) satisfying a cusp lightness condition according to which

$$f\left( C_C^{SOURCE}, L_C^{SOURCE} \right) = L_C^{TARGET} \ ,$$

where $C_C^{SOURCE}$ and $L_C^{SOURCE}$ are respectively the chroma and the lightness of source cusp color $\left( M_C^{SOURCE} \right)$ associated with said source color provided by said cusp color computing module,

where $L_C^{TARGET}$ is the lightness of target cusp color $\left( M_C^{TARGET} \right)$ associated with said source color provided by said cusp color computing module,

- a lightness-mapping module configured to apply to each source color to map the lightness-mapping function $f(C,L)$ associated with said source color provided by said lightness-mapping function definition module.

8. A processor readable medium having stored therein instructions for causing a processor to perform the method of color gamut mapping according to any one of claims 1 to 6.

9. A computer-readable program comprising computer-executable instructions to enable a computer to perform the method of color gamut mapping according to any one of claims 1 to 6.

Fig.1

Fig.2

Fig.3

Fig.4

Fig.5

Europäisches
Patentamt

European
Patent Office

Office européen
des brevets

## EUROPEAN SEARCH REPORT

Application Number

EP 15 30 6007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/156929 A1 (KUO CHUNG-HUI [US] ET AL) 24 June 2010 (2010-06-24) * paragraph [0021] - paragraph [0037]; figures 1-6 * | 1-9 | INV. H04N1/60 H04N9/67 |
| A | US 2012/019843 A1 (KISHIMOTO YASUNARI [JP]) 26 January 2012 (2012-01-26) * paragraph [0023] - paragraph [0056]; figures 2-9 * | 1-9 | |
| A,D | STAUDER J ET AL: "Gamut mapping for motion picture", 5TH EUROPEAN CONFERENCE ON COLOUR IN GRAPHICS, IMAGING, AND VISION AND 12TH INTERNATIONAL SYMPOSIUM ON MULTISPECTRAL COLOUR SCIENCE 2010 - EUROPEAN CONFERENCE ON COLOUR IN GRAPHICS, IMAGING, AND VISION ; 5 (JOENSUU) : 2010.06.14-17 CGIV ; 5 (JOENSUU), 14 June 2010 (2010-06-14), pages 380-386, XP008174943, * the whole document * | 1-9 | |
| A,D | US 2005/248784 A1 (HENLEY SHARON A [US] ET AL) 10 November 2005 (2005-11-10) * paragraph [0028] - paragraph [0048]; figures 3-12 * | 1-9 | TECHNICAL FIELDS SEARCHED (IPC) H04N |

The present search report has been drawn up for all claims

| Place of search | Date of completion of the search | Examiner |
|---|---|---|
| Munich | 22 December 2015 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6007

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2015

| Patent document cited in search report | | Publication date | Patent family member(s) | | Publication date |
|---|---|---|---|---|---|
| US 2010156929 | A1 | 24-06-2010 | CN 102257805 A | | 23-11-2011 |
| | | | EP 2371119 A1 | | 05-10-2011 |
| | | | JP 2012513722 A | | 14-06-2012 |
| | | | US 2010156929 A1 | | 24-06-2010 |
| | | | WO 2010074729 A1 | | 01-07-2010 |
| US 2012019843 | A1 | 26-01-2012 | JP 5630115 B2 | | 26-11-2014 |
| | | | JP 2012028903 A | | 09-02-2012 |
| | | | US 2012019843 A1 | | 26-01-2012 |
| US 2005248784 | A1 | 10-11-2005 | US 2005248784 A1 | | 10-11-2005 |
| | | | US 2006221396 A1 | | 05-10-2006 |
| | | | WO 2005109856 A2 | | 17-11-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007236761 A
- US 20070236761 A
- US 2005248784 A
- EP 2375719 A

**Non-patent literature cited in the description**

- 3D computer graphics. Alan Watt, 1993
- **PELLEGRI ; SCHETTINI.** Gamut boundary determination for a colour printer using the Face Triangulation Method. *the Proceedings of SPIE,* 2003, vol. 5008
- **J.STAUDER et al.** Motion Picture Versioning by Gamut Mapping. *the Eighteenth Color and Imaging Conference: Color Science and Engineering Systems, Technologies, and Applications,* November 2010, 178-183